# EUROPEAN PATENT APPLICATION

(11) **EP 2 479 516 A2**
(43) Date of publication of application: **25.07.2012**
(21) Application number: 12151332.9
(22) Date of filing: 17.01.2012
(51) Int. Cl.: F25B 1/00, F25B 49/02, F24D 3/18

(54) **Heat pump**

(30) Priority: 19.01.2011 JP 2011009239
(71) Applicant: Mitsubishi Heavy Industries, Tokyo 108-8215 (JP)
(72) Inventor: Hokamura, Taku, MINATO-KU, TOKYO, 108-8215 (JP); Okada, Takuya, MINATO-KU, TOKYO, 108-8215 (JP); Watanabe, Ken, MINATO-KU, TOKYO, 108-8215 (JP); Omura, Minemasa, MINATO-KU, TOKYO, 108-8215 (JP)
(74) Representative: Intès, Didier Gérard André

(57) **Abstract**

A heat pump (1) in which an inverter-driven compressor (12), a usage-side first heat exchanger (13), decompression means (15), a heat-source-side second heat exchanger (16) are sequentially connected by a refrigerant pipe (17), forming a closed-cycle refrigerant circuit (18), the heat pump (1) including a control unit (30) that, when changing the operating frequency of the compressor (12) in response to a change in operating conditions, changes the frequency-changing rate based on a deviation between a current frequency and a target frequency, the frequency-changing rate being increased when the deviation is large and the frequency-changing rate being decreased when the deviation is small.

## Description

### Technical Field

The present invention relates to heat pumps that are suitable for application to water heaters, etc.

### {Background Art}

In general, a typical heat pump for a water heater includes an inverter-driven compressor, a usage-side first heat exchanger, decompression means, and a heat-source-side second heat exchanger, which are sequentially connected by a refrigerant pipe, forming a closed-cycle refrigerant circuit, where the usage-side first heat exchanger serves as a hot-water heat exchanger that produces hot water through heat exchange between refrigerant and water. The hot water produced by the hot-water heat exchanger is temporarily stored in a hot-water storage tank and is then used by being, for example, supplied to a place where it is needed, used directly, or circulated through a heating-mode heat exchanger.

in such a heat pump for a water heater, in order to reduce the operation start-up time when heating water, the operating frequency of the compressor has to be sharply increased to a target frequency. However, such a sharp increase in frequency may cause an overload, a sudden increase in high pressure (an overshoot), or liquid compression, leading to a problem, such as lowering the reliability of the compressor. Also during stable operation, when the temperature of water entering the hot-water heat exchanger or the outside-air temperature changes, the operating frequency of the compressor is changed to an appropriate frequency in accordance therewith. However, if the operating frequency is changed suddenly, the same problem as in start-up occurs.

To counter this, PTL 1 proposes that, when the operating frequency of the compressor is increased to the target frequency based on the incoming water temperature or the outside-air temperature to change the capacity of the compressor at start-up or when the temperature of water entering the hot-water heat exchanger or the outside-air temperature changes, the frequency is gradually increased at predetermined intervals so as to prevent an overload, a sudden increase in high-pressure, or liquid-backflow.

### {Citation List}

### {patent Literature}

{PTL 1} The Publication of Japanese Patent No. 3918804 {Summary of Invention}

### {Technical Problem

However, the disclosure of PTL 1 is configured such that, when the operating frequency of the compressor is increased to the target frequency, the frequency is uniformly and gradually increased by a predetermined value α every predetermined period of time T. Thus, there have been problems to be resolved, i.e., a long time to reach the target frequency, insufficient starting characteristics at start-up and responsiveness to a change in the operating conditions, a risk of a high-pressure overshoot, and insufficient measures against liquid-backflow.

The present invention has been made in view of the above-described circumstances, and an object thereof is to provide a heat pump which has improved starting characteristics at start-up and improved responsiveness to a change in the operating conditions and which does not suffer from the problems of an overload operation, a high-pressure overshoot near the target frequency, and liquid-backflow, thereby making it possible to improve the reliability of the compressor.

### {Solution to Problem}

In order to solve the above-described problems, a heat pump of the present invention employs the following solutions.
That is, a heat pump of the present invention is a heat pump including an inverter-driven compressor, a usage-side first heat exchanger, decompression means, and a heat-source-side second heat exchanger, which are sequentially connected by a refrigerant pipe, forming a closed-cycle refrigerant circuit. The heat pump includes a control unit that changes an operating frequency of the compressor in response to a change in operating conditions by changing a frequency-changing rate based on a deviation between a current frequency and a target frequency, the frequency-changing rate being increased when the deviation is large and the frequency-changing rate being decreased when the deviation is small.

According to the present invention, a heat pump having an inverter-driven compressor includes a control unit that changes an operating frequency of the compressor in response to a change in operating conditions by changing a frequency-changing rate based on a deviation between a current frequency and a target frequency, the frequency-changing rate being increased when the deviation is large and the frequency-changing rate being decreased when the deviation is small. Thus, the heat pump can be operated such that the frequency-changing rate is increased when the deviation between the current operating frequency and the target frequency of the compressor is large, such as at start-up or when the operating conditions are changed, and such that the frequency-changing rate is gradually decreased as the deviation from the target frequency decreases. Accordingly, it is possible to improve the starting characteristics of the heat pump at start-up and the responsiveness to a change in the operating conditions, and it is possible to prevent the problems of an overload operation, a high-pressure overshoot near the target frequency, and liquid-backflow occurring when the operating frequency is changed, thereby making it possible to improve the reliability of the compressor, and hence, the heat pump.

In addition, in the above-described heat pump of the present invention, the control unit changes the operating frequency at a predetermined low frequency-changing rate regardless of the deviation, while liquid-backflow conditions are detected.

According to the present invention, the control unit changes the operating frequency at a predetermined low frequency-changing rate regardless of the deviation, while liquid-backflow conditions are detected. Thus, while liquid-backflow conditions are detected, which may cause liquid compression in the compressor, the operating frequency of the compressor is slowly changed at a predetermined sufficiently low frequency-changing rate regardless of the degree of deviation, and, when the liquid-backflow conditions are no longer detected, the control may be switched to the above-described control, in which the frequency-changing rate is changed based on the deviation. Accordingly, the compressor can be driven while reliably preventing liquid compression and dilution of lubricant oil due to liquid-backflow, whereby the reliability of the compressor can be improved.

Furthermore, in the above-described heat pump of the present invention, the liquid-backflow conditions are determined by detecting the temperature under a closed dome of the compressor or the temperature of the bottom portion in the closed dome.

According to the present invention, because the liquid-backflow conditions are determined by detecting the temperature under a closed dome of the compressor or the temperature of the bottom portion in the closed dome, by providing temperature detecting means, such as a thermistor, under the closed dome of the compressor or on the bottom portion in the closed dome to determine whether or not the liquid-backflow conditions are established based on the detected temperature, the operating frequency of the compressor can be controlled to an optimum value by changing the frequency-changing rate appropriately. Accordingly, by reliably determining whether or not the liquid-backflow conditions are established from the temperature under the closed dome of the compressor or the temperature of the bottom portion in the closed dome, liquid compression and dilution of lubricant oil due to liquid-backflow can be reliably prevented.

Furthermore, in the above-described heat pump of the present invention, the liquid-backflow conditions are determined by detecting the degree of suction superheating of refrigerant sucked into the compressor.

According to the present invention, because the liquid-backflow conditions are determined by detecting the degree of suction superheating of refrigerant sucked into the compressor, by calculating the degree of suction superheating from detected values obtained by a temperature sensor and a pressure sensor for detecting the temperature and pressure of the refrigerant sucked into the compressor, and by determining whether or not the liquid-backflow conditions are established based on the calculation, the operating frequency of the compressor can be controlled to an optimum value by changing the frequency-changing rate appropriately. Accordingly, by reliably determining whether or not the liquid-backflow conditions are established from the degree of suction superheating of the refrigerant sucked into the compressor, liquid compression and dilution of lubricant oil due to liquid-backflow can be reliably prevented.

In addition, in any one of the above-described heat pumps of the present invention, the heat pump is a heat pump for a water heater in which the usage-side first heat exchanger serves as a refrigerant/water heat exchanger, and the operating frequency of the compressor can be changed according to the temperature of water entering the refrigerant/water heat exchanger or outside-air temperature.

According to the present invention, the heat pump is a heat pump for a water heater in which the usage-side first heat exchanger serves as a refrigerant/water heat exchanger, and the operating frequency of the compressor can be changed according to the temperature of water entering the refrigerant/water heat exchanger or outside-air temperature. Thus, when the capacity of the compressor is changed according to the temperature of the water entering the refrigerant/water heat exchanger or the outside-air temperature, the operating frequency of the compressor can be gradually changed while changing the frequency-changing rate based on the degree of deviation between the current operating frequency and the target frequency of the compressor. Accordingly, it is possible to improve the starting characteristics when heating water, and it is possible to perform a stable water-heating operation with the heat pump while preventing an overload caused by a change in the incoming water temperature, a high-pressure overshoot, or liquid-backflow.

### {Advantageous Effects of Invention}

According to the present invention, the heat pump can be operated such that the frequency-changing rate is increased when the deviation between the current operating frequency and the target frequency of the compressor is large, such as at start-up or when the operating conditions are changed, and such that the frequency-changing rate is gradually decreased as the deviation from the target frequency decreases. Accordingly, it is possible to improve the starting characteristics of the heat pump at start-up and the responsiveness to a change in the operating conditions, and it is possible to prevent the problems of an overload operation, a high-pressure overshoot near the target frequency, and liquid-backflow occurring when the operating frequency is changed, thereby making it possible to improve the reliability of the compressor, and hence, the heat pump.

### {Brief Description of Drawings}

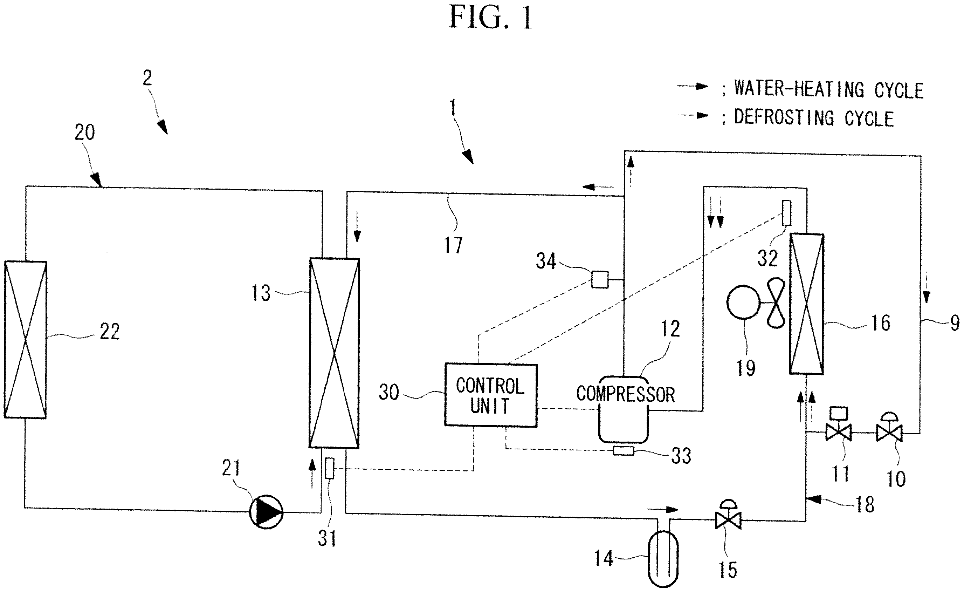

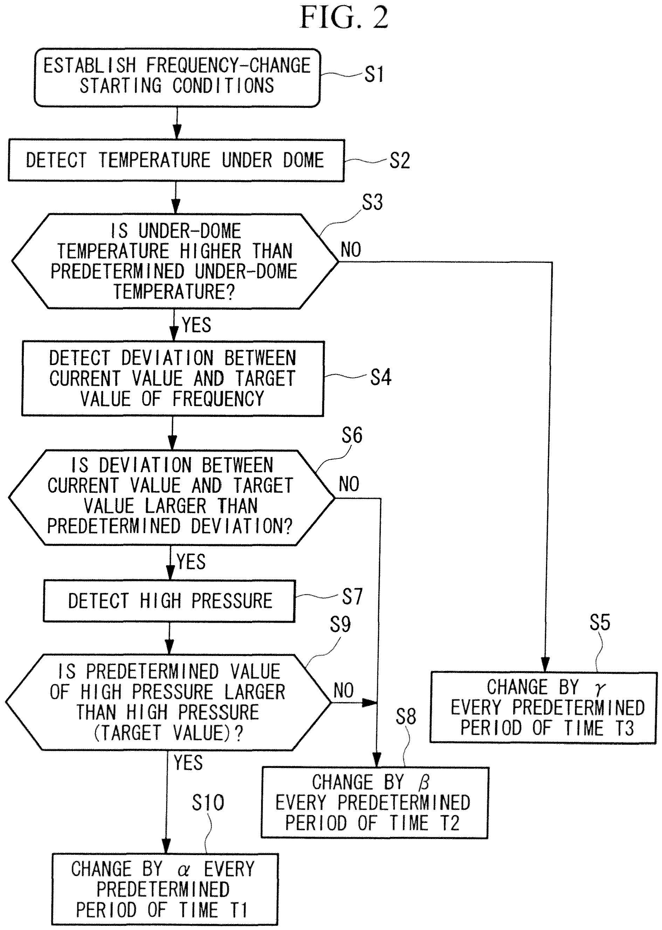

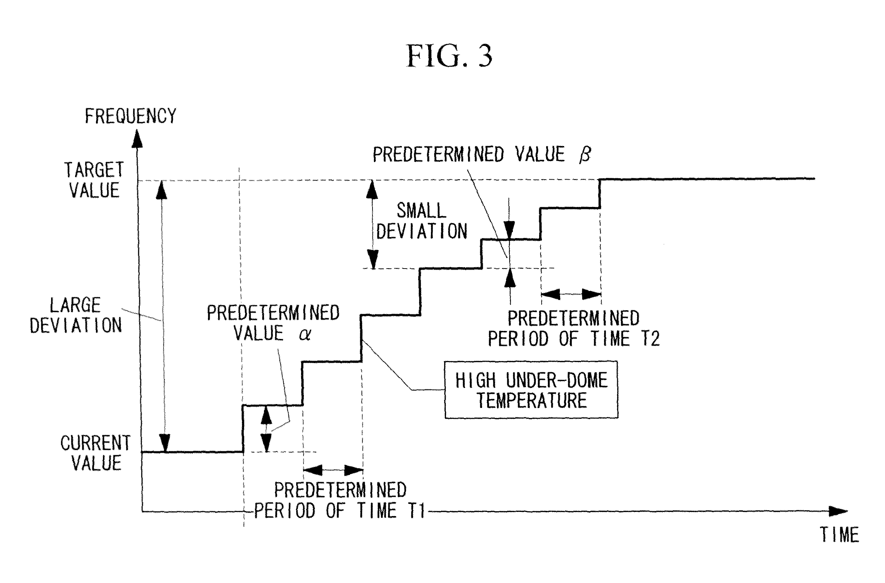

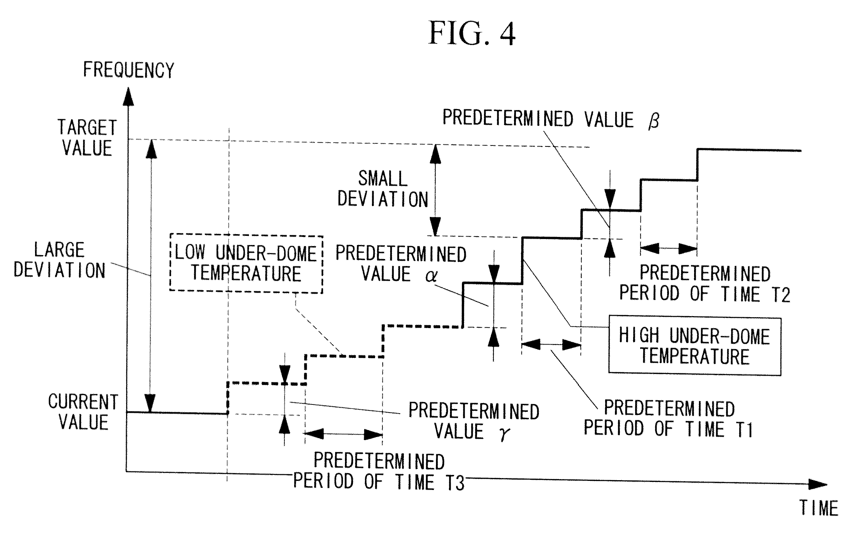

(FIG. 1} FIG. 1 is a refrigerant circuit diagram of a heat pump according to a first embodiment of the present invention.
{FIG. 2} FIG. 2 is a flowchart showing the flow of operating-frequency control of a compressor in the heat pump shown in FIG. 1 .
{FIG. 3} FIG. 3 is an explanatory diagram showing changing the operating frequency of the compressor to a target value when liquid-backflow conditions of the heat pump shown in FIG. 1 are not detected.
{FIG. 4} FIG. 4 is an explanatory diagram showing changing the operating frequency of the compressor to the target value when liquid-backflow conditions of the heat pump shown in FIG. 1 are detected.

### {Description of Embodiments}

Embodiments of the present invention will be described below with reference to the drawings.

### First embodiment

A first embodiment of the present invention will be described using FIGS. 1 to 4.

FIG. 1 shows a refrigerant circuit diagram of a heat pump according to an embodiment of the present invention.

A heat pump 1 is applied to a water heater 2. This heat pump 1 includes a compressor 12 with a variable rotational speed and which is driven via an inverter-driven electric motor; an electromagnetic valve 11 that switches a refrigeration cycle 18 between a water-heating cycle and a defrosting cycle; a usage-side first heat exchanger (a hot-water refrigerant/water heat exchanger) 13; a receiver 14; a hot-water electric expansion valve (decompression means) 15; and a heat-source-side second heat exchanger (an outdoor air heat exchanger) 16.

Furthermore, in the heat pump 1, the above-mentioned components, i.e., the compressor 12, the first heat exchanger (hot-water refrigerant/water heat exchanger) 13, the receiver 14, the hot-water electric expansion valve 15, and the second heat exchanger (outdoor air heat exchanger) 16, are sequentially connected via a refrigerant pipe 17, forming a closed-cycle refrigerant circuit (refrigeration cycle) 18, to which a hot-gas bypass circuit 9 for defrosting, including a defrosting electric expansion valve (decompression means) 10 and the electromagnetic valve 11, is connected between the discharge side of the compressor 12 and the inlet side of the second heat exchanger (outdoor air heat exchanger) 16 of the refrigerant circuit 18. By opening or closing the electromagnetic valve 11 and the hot-water electric expansion valve 15, the water-heating cycle, in which refrigerant is circulated in the direction indicated by solid-line arrows, and the defrosting cycle, in which refrigerant is circulated in the direction indicated by dashed-line arrows, can be switched. The heat-source-side second heat exchanger 16 is provided with an outdoor fan 19 for making the outside air flow.

A hot water circuit 20 for heating water is connected to the usage-side first heat exchanger (hot-water refrigerant/water heat exchanger) 13, which serves as a refrigerant/water heat exchanger that produces hot water at a predetermined temperature through heat exchange between the refrigerant flowing in the refrigerant circuit 18 and the hot water flowing in the hot water circuit 20. The hot water circuit 20 is provided with a hot-water circulating pump 21 and a heating-mode radiator 22 and is configured such that hot water produced by the first heat exchanger 13 is supplied to the radiator 22 to be used for heating, and the hot water that has been reduced in temperature therein is circulated back to the first heat exchanger 13 via the hot-water circulating pump 21.

Note that the above-described hot water circuit 20 for heating water is just an example. Other than the above configuration, the hot water circuit 20 may have carious configurations: example include a system in which a hot-water storage tank for storing produced hot water is provided, and the hot water is supplied therefrom to a place where it is needed; a system in which hot water produced by the first heat exchanger 13 is used directly; and a system including a combination thereof.

Furthermore, the heating capacity of the heat pump 1 is adjustable according to the load at the water heater 2 side. This heating capacity can be adjusted by changing the rotational speed of the compressor 12 with an inverter. In addition, the inverter-driven compressor 12 is driven via a control unit 30 that detects the temperature of hot water or water supplied to the first heat exchanger 13 for heating water, the outside-air temperature, and the temperature under the closed dome of the compressor 12 with temperature sensors 31, 32, and 33, such as thermistors, and detects a high pressure in the heat pump 1 with a high-pressure sensor 34 to control the operating frequency of the compressor 12 based on these detected values.

The control unit 30 is configured to perform control to change the frequency according to a control flowchart shown in FIG. 2, when change starting conditions for changing the operating frequency of the compressor 12 are established. The details of the control will be described more specifically below using FIGS. 2 to 4.
In step S1, when frequency-change starting conditions are established, the process proceeds to step S2, where the temperature under the closed dome of the compressor 12 is detected with the temperature sensor 33. This temperature under the closed dome is compared with a predetermined under-dome temperature in step S3 to determine whether or not the under-dome temperature is higher than the predetermined under-dome temperature.

In step S3, if it is determined that the under-dome temperature is higher than the predetermined value ("YES"), the process proceeds to step S4, and if it is determined that the under-dome temperature is lower than the predetermined value ("NO"), the process proceeds to step S5. As in this case, if it is determined that the under-dome temperature is lower than the predetermined value, it is highly likely that liquid-backflow to the compressor 12 occurs. Therefore, in step S5, in order to prioritize the prevention of liquid-backflow, a frequency-changing rate R1 is minimized regardless of the degree of deviation between the current operating frequency and the target frequency of the compressor 12, and an operation is repeated in which the frequency is slowly and gradually increased at the rate R1, at which the frequency is increased by a predetermined value Υ every predetermined period of time T3, and is returned to the start position (see FIG. 4).

On the other hand, if it is determined that the under-dome temperature is higher than the predetermined value and there is no risk of liquid-backflow in step S3, the process proceeds to step S4, where the deviation between the current value and the target frequency (target value) of the operating frequency of the compressor 12 is detected, and the process proceeds to the subsequent step S6. In step S6, the deviation between the current value and the target value of the operating frequency of the compressor 12 is compared with a predetermined deviation set in advance, and it is determined whether or not the deviation between the current value and the target value is larger than the predetermined deviation. In step S6, if it is determined that the deviation between the current value and the target value is larger than the predetermined value ("YES"), the process proceeds to step S7, and if it is determined that the deviation between the current value and the target value is smaller than the predetermined value ("NO"), the process proceeds to step S8.

In step S8, because it has been determined that the deviation between the current value and the target value is smaller than the predetermined value, a frequency-changing rate R2 is set to a relatively low value, and the frequency is increased at rate R2 , at which the frequency is increased by a predetermined value β every predetermined period of time T2, such that it gradually approaches the target value and such that the high-pressure overshoot does not occur (see FIGS. 3 and 4). On the other hand, if it is determined that the deviation between the current value and the target value is larger than the predetermined value in step S6, the process proceeds to step S7, where the pressure on the high-pressure side of the heat pump 1 is detected with the high-pressure sensor 34.

The detected value of the high pressure is compared with the predetermined value of the high pressure in step S9 to determine whether or not the predetermined value of the high pressure is larger than the high pressure (target value). This determination is for the purpose of determining the possibility of the high pressure increasing to an abnormal level, activating a high-pressure protection function. If the detected value of the high pressure is less than the predetermined value and it is determined that there is no risk of the high-pressure protection function being activated ("YES"), the process proceeds to step S10, and if the high pressure is higher than the predetermined value ("NO"), the process proceeds to step S8. In step S10, because it has been determined that there is no risk of the high-pressure protection function being activated, a frequency-changing rate R3 is maximized, and the frequency is increased at rate R3, at which the frequency is increased by a predetermined value α every predetermined period of time T1 (see FIGS. 3 and 4).

As described above, in this embodiment, the frequency-changing rates R1, R2, and R3, predetermined periods of time T1, T2, and T3, and predetermined values α, β, and γ respectively have the following relationships: R3 > R2 > R1, T1 > T2 > T3, and α > β > γ. The operating frequency of the compressor 12 is changed based on the degree of deviation between the current frequency and the target frequency. When the deviation is large and only when it is determined that the high-pressure protection function is not activated, the frequency-changing rate is set to R3, the maximum value, such that the frequency quickly approaches the target value. When the deviation is small, the frequency-changing rate is reduced to R2 such that the frequency gradually approaches the target value and a high-pressure overshoot or the like can be prevented. In addition, when it is highly likely that liquid-backflow occurs, the frequency-changing rate is set to R1, the minimum value, regardless of the degree of deviation, such that the frequency is gradually and slowly increased to prevent liquid compression.

With the above-described heat pump 1, by closing the electromagnetic valve 11 to circulate the refrigerant compressed in the compressor 12 toward the usage-side first heat exchanger (hot-water refrigerant/water heat exchanger) 13, thereby making the first heat exchanger 13 serve as a radiator and making the heat-source-side second heat exchanger (outdoor air heat exchanger) 16 serve as a heat absorber, hot water or water circulating in the hot water circuit 20 can be heated by the first heat exchanger 13. Then, by supplying this hot water to the radiator 22 via the hot water circuit 20 and the hot-water circulating pump 21, this hot water can be used for heating or the like.

Furthermore, if frost forms on the second heat exchanger 16 on the heat-absorber side during the above-described water-heating operation, by closing the hot-water electric expansion valve (decompression means) 15 and opening the electromagnetic valve 11 to switch the flow of the refrigerant to a defrosting cycle, high-temperature high-pressure hot gas discharged from the compressor 12 is made to circulate through the second heat exchanger 16 via the hot-gas bypass circuit 9. Thus, the second heat exchanger 16 can be defrosted.

On the other hand, the capacity of the heat pump 1 is adjusted by changing the rotational speed of the inverter-driven compressor 12 via the control unit 30, based on the temperature of hot water or water supplied to the first heat exchanger 13, the outside-air temperature, and the temperature under the closed dome of the compressor 12 detected with the temperature sensors 31, 32, and 33, and the high pressure detected with the high-pressure sensor 34. That is, the operating frequency of the inverter-driven compressor 12 is changed to the target frequency in order to adjust the capacity by changing the rotational speed of the compressor 12 according to the load which varies at start-up or due to a change in the operating conditions.

At this time, as shown in FIGS. 3 and 4, based on the degree of deviation between the current operating frequency and the target frequency of the compressor 12, when the deviation is larger than the predetermined value and it is determined that the high-pressure protection function is not activated, from the detected value of the high-pressure sensor 34, the frequency-changing rate is set to the maximum rate R3, at which the frequency is increased by the predetermined value α every predetermined period of time T1, such that the frequency quickly approaches the target value. Furthermore, when the deviation is smaller than the predetermined value, the frequency-changing rate is reduced to rate R2, at which the frequency is increased by the predetermined value β every predetermined period of time T2, such that the frequency gradually approaches the target value to prevent a high-pressure overshoot or the like.

In addition, when it is determined that the possibility of liquid-backflow is high, from the under-dome temperature of the compressor 12 detected with the temperature sensor 33, the frequency-changing rate is set to the minimum rate R1, at which the frequency is increased by the predetermined value γ every predetermined period of time T3, regardless of the degree of deviation, such that the frequency is slowly and gradually increased to allow operation while reliably preventing liquid compression and dilution of lubricant oil due to liquid-backflow.

Thus, according to this embodiment, it is possible to improve the starting characteristics of the heat pump 1 at start-up and the responsiveness to a change in the operating conditions; it is possible to prevent the problems of an overload operation, a high-pressure overshoot near the target frequency, and liquid-backflow occurring when the operating frequency is changed; and it is possible to improve the reliability of the compressor 12, and hence, the heat pump 1. Thus, a stable water-heating operation can be performed by the heat pump 1. In particular, the starting characteristics and the responsiveness can be significantly improved because the operating frequency can be increased by setting the frequency-changing rate R3 as high as possible in a range in which the high-pressure protection function is not activated.

Furthermore, the frequency-changing rate is minimized especially while liquid-backflow conditions are detected. Thus, liquid compression and dilution of lubricant oil due to liquid-backflow can be reliably prevented, thereby improving the reliability of the compressor 12.
In addition, because the liquid-backflow conditions are determined by detecting the temperature under the closed dome of the compressor 12, the operating frequency of the compressor 12 can be controlled to an optimum value by providing the temperature sensor 33, such as a thermistor, under the closed dome of the compressor 12, determining whether or not the liquid-backflow conditions are established based on the detected temperature, and changing the frequency-changing rate to the minimum rate R1 when the liquid-backflow conditions are detected. Accordingly, whether or not the liquid-backflow conditions are established can be reliably determined from the temperature under the closed dome of the compressor 12, and thus, liquid compression and dilution of lubricant oil due to liquid-backflow can be reliably prevented.

### Second Embodiment

Next, a second embodiment of the present invention will be described.

This embodiment differs from the above-described first embodiment in the method of detecting the liquid-backflow conditions. Because the other configurations are the same as those according to the first embodiment, descriptions thereof will be omitted.

In this embodiment, the liquid-backflow conditions are detected using a method in which the degree of suction superheating of refrigerant sucked into the compressor 12 is detected, instead of the method in which the temperature under the closed dome of the compressor 12 is detected with the temperature sensor 33.

Examples of the method of detecting the degree of suction superheating of the refrigerant include:
(1) A temperature sensor and a pressure sensor are provided in a refrigerant pipe extending from the second heat exchanger 16, serving as a heat absorber (evaporator), to the compressor 12, to detect the temperature and pressure of the refrigerant sucked into the compressor 12. Then, from this refrigerant pressure, the saturation temperature of the refrigerant is calculated, and, based on the difference thereof with respect to the actual temperature of the refrigerant detected with the temperature sensor, the degree of suction superheating is detected.
(2) From the difference between the detected value obtained by a temperature sensor provided in a refrigerant pipe extending from the second heat exchanger 16 to the compressor 12 and the detected value obtained by a temperature sensor provided in the second heat exchanger 16, at a position where the temperature sensor can detect the maturation temperature of the refrigerant, the degree of suction superheating is detected.

(3) A liquid separator is provided in a refrigerant pipe extending from the second heat exchanger 16 to the compressor 12, and, based on the detected value obtained by a temperature sensor and a pressure sensor provided in a refrigerant pipe between the liquid separator and the second heat exchanger 16, the degree of suction superheating is detected as in the method (1) above.
Existing sensors, such as an intake-refrigerant temperature sensor, a low-pressure pressure sensor, a heat-exchanging temperature sensor, and the like, which are provided in a typical heat plump 1, may be used as the above-described temperature sensor and pressure sensor.

Thus, according to this embodiment, because the liquid-backflow conditions can be determined by detecting the degree of suction superheating of the refrigerant sucked into the compressor 12, the under-dome temperature sensor 33 of the compressor 12 used in the first embodiment is not necessary. By calculating the degree of suction superheating of the refrigerant from detected values obtained by the existing temperature sensor and low-pressure sensor, it can be determined whether or not the liquid-backflow conditions are established on the basis of the calculation. When the liquid-backflow conditions are detected, the operating frequency of the compressor 12 can be controlled appropriately by changing a frequency-changing rate to the minimum rate R1. Accordingly, it is possible to reliably determine whether or not the liquid-backflow conditions are established from the degree of suction superheating of the refrigerant sucked into the compressor 12, and it is possible to reliably prevent liquid compression and dilution of lubricant oil due to liquid-backflow.

Note that the present invention is not limited to the invention according to the above-described embodiments, and it can be appropriately modified within a scope not departing from the spirit thereof. For example, although the temperature under the closed dome of the compressor 12 is detected to detect the liquid-backflow conditions in the first embodiment, it is also possible to detect the temperature in the closed dome. Furthermore, although no specific mention is made about the refrigerant filling the refrigerant circuit 18 of the heat pump 1 in the above-described embodiments, not only an HFC refrigerant, but also a CO2 refrigerant may be used to configure the heat pump 1 as a supercritical heat pump cycle.

In addition, in the above-described embodiments, the predetermined periods of time T1, T2, and T3 are made to have the relationship T1 > T2 > T3, and the predetermined values α, β, and γ are made to have the relationship α > β > γ, so that the frequency-changing rates R1, R2, R3 have the relationship R3 > R2 > R1. However, the predetermined periods of time T1, T2, and T3 do not necessarily have to have the relationship T1 > T2 > T3; for example, the relationship T1 = T2 = T3 is also possible. The important point is that the frequency-changing rates R1, R2, R3 have the relationship R3 > R2 > R1.

Furthermore, although an example has been described in which the hot-water electric expansion valve (decompression means) 15 and the defrosting electric expansion valve (decompression means) 10 are provided as the decompression means of the water-heating cycle and the defrosting cycle in the above-described embodiments, the decompression means 10 and 15 may be thermostatic expansion valves or fixed throttles, such as capillary tubes, instead of the electric expansion valves. In such a case, an electromagnetic valve has to be provided also on the downstream side of the hot-water decompression means 15.

### {Reference Signs List}

- 1: heat pump
- 2: water heater
- 9: hot-gas bypass circuit
- 10: defrosting electric expansion valve
- 11: electromagnetic valve
- 12: compressor
- 13: usage-side first heat exchanger (hot-water refrigerant/water heat exchanger)
- 15: hot-water electric expansion valve (decompression means)
- 16: heat-source-side second heat exchanger (outdoor air heat exchanger)
- 17: refrigerant pipe
- 18: refrigerant circuit
- 20: hot water circuit
- 30: control unit
- 31, 32, 33: temperature sensor
- 34: high-pressure sensor

## Claims

1. A heat pump (1) including an inverter-driven compressor (12), a usage-side first heat exchanger (13), decompression means (15), and a heat-source-side second heat exchanger (16), which are sequentially connected by a refrigerant pipe (17), forming a closed-cycle refrigerant circuit (18), the heat pump (1) being **characterized in that** it comprises a control unit (30) that changes an operating frequency of the compressor (12) in response to a change in operating conditions by changing a frequency-changing rate based on a deviation between a current frequency and a target frequency, the frequency-changing rate being increased when the deviation is large and the frequency-changing rate being decreased when the deviation is small.

2. The heat pump (1) according to Claim 1, wherein the control unit (30) changes the operating frequency at a predetermined low frequency-changing rate regardless of the deviation, while liquid-backflow conditions are detected.

3. The heat pump (1) according to Claim 2, wherein the liquid-backflow conditions are determined by detecting the temperature under a closed dome of the compressor (12) or the temperature of the bottom portion in the closed dome.

4. The heat pump (1) according to Claim 2, wherein the liquid-backflow conditions are determined by detecting the degree of suction superheating of refrigerant sucked into the compressor (12).

5. The heat pump (1) according to any one of Claims 1 to 4, wherein
the heat pump (1) is a heat pump for a water heater (2) in which the usage-side first heat exchanger (13) serves as a refrigerant/water heat exchanger, and
the operating frequency of the compressor (12) can be changed according to the temperature of water entering the refrigerant/water heat exchanger (13) or outside-air temperature.
